(19) Europäisches Patentamt
European Patent Office
Office européen des brevets

(11) **EP 2 132 909 B1**

(12) **FASCICULE DE BREVET EUROPEEN**

(45) Date de publication et mention
de la délivrance du brevet:
**07.02.2018 Bulletin 2018/06**

(21) Numéro de dépôt: **08762178.5**

(22) Date de dépôt: **29.02.2008**

(51) Int Cl.:
***H04L 12/801*** *(2013.01)*

(86) Numéro de dépôt international:
**PCT/FR2008/050343**

(87) Numéro de publication internationale:
**WO 2008/119915 (09.10.2008 Gazette 2008/41)**

(54) **PROCÉDÉ DE CONTRÔLE DYNAMIQUE DU NOMBRE DE FLUX DE DONNÉES TRANSITANT DANS UNE ARCHITECTURE RÉSEAU**

VERFAHREN ZUR DYNAMISCHEN STEUERUNG DER ANZAHL VON DURCH EINE NETZWERKARCHITEKTUR GELEITETEN DATENSTRÖMEN

METHOD FOR DYNAMICALLY CONTROLLING THE NUMBER OF DATA STREAMS TRAVELLING THROUGH A NETWORK ARCHITECTURE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.03.2007 FR 0753803**

(43) Date de publication de la demande:
**16.12.2009 Bulletin 2009/51**

(73) Titulaire: **Orange
75015 Paris (FR)**

(72) Inventeurs:
• PENHOAT, Joël
**F-22300 Lannion (FR)**
• TAFASCA, Tarek
**97427 Etang Salé Les Hauts
La Réunion (FR)**

• **BENYEKHLEF, Marouane
Casablanca (MA)**

(74) Mandataire: **Cabinet Beau de Loménie
158, rue de l'Université
75340 Paris Cedex 07 (FR)**

(56) Documents cités:
**WO-A-2005/114920     WO-A-2006/037361
US-A1- 2004 082 338**

• **MOTOROLA: "Motorola UMA - A Residential Seamless Mobility Solution" INTERNET CITATION, [Online] 21 février 2005 (2005-02-21), XP002407164 Extrait de l'Internet: URL:http://www.motorola.com/mot/doc/5/5550 _MotDoc.pdf> [extrait le 2006-11-14]**

**Description**

La présente invention concerne la communication entre terminaux appartenant à des réseaux de communication distincts, par exemple entre un terminal appartenant à un réseau de communication mobile local privé et un terminal appartenant à un réseau de communication large bande administré par un opérateur.

Voir par exemple la publication WO2006/037361 qui décrit un système de communication entre terminaux appartenant à des réseau distincts.

Plus précisément, l'invention concerne le contrôle de l'établissement d'une nouvelle communication entre de tels terminaux, en fonction du niveau de la qualité de service offert par les réseaux hébergeant ces terminaux, à un instant donné.

L'invention s'applique notamment, mais non exclusivement, à une architecture réseau du type UMA (pour "Unlicensed Mobile Access" en anglais, pour "mobile à libre accès" en français). Une telle architecture permet en effet à un usager d'utiliser son téléphone mobile sur un réseau local IP (pour "Internet Protocol" en anglais, ou "protocole Internet" en français), lorsqu'il est chez lui, au bureau ou, plus généralement, lorsqu'il se situe dans une zone couverte par un point d'accès d'un réseau IP mobile local privé, plutôt que d'utiliser le réseau fixe ou mobile payant d'un opérateur.

Une telle approche selon la norme UMA offre pour avantage de diminuer sensiblement les coûts de communication, d'autant plus pour entreprise au sein de laquelle le nombre des communications passées par ses collaborateurs est souvent important.

A titre de simple exemple illustratif et non limitatif, la mise en oeuvre d'une architecture réseau conçue selon la norme UMA permet donc de prolonger les services mobiles GSM/ GPRS dans les réseaux sans fils IP libres d'accès (Wi-Fi™ ou Bluetooth™ notamment) en créant un tunnel de communication, directement entre un terminal de communication client et le coeur du réseau de l'opérateur, dans l'objectif :

- de permettre à l'usager d'utiliser des services mobiles voix et données par l'intermédiaire de réseaux privés en conservant le même numéro de téléphone ;
- de supporter le passage d'un réseau privé à un réseau GSM et réciproquement, sans coupure ;
- d'être indépendant de la technologie utilisée pour les réseaux privés, par exemple du type Wi-Fi™ ou Bluetooth™, tout en étant également transparent pour les équipements existants dans les réseaux privés ;
- d'assurer une sécurité équivalente aux réseaux GSM.

Dans le cadre d'une architecture réseau UMA de type résidentiel (par exemple celle déployée dans le cadre de l'offre Unik - marque déposée, de l'opérateur Orange - marque déposée), lorsqu'un appel sortant est généré par un terminal de communication de type GSM/ GPRS sur le réseau Wi-fi (marque déposée), une prise de décision s'opère d'une façon relativement simple, selon des critères préalablement définis par l'opérateur de téléphonie mobile.

Si au moment de l'appel, le terminal se situe dans la zone de couverture de sa passerelle Wi-Fi formant point d'accès unique au réseau de l'opérateur, alors la communication Wi-fi est prolongée via le coeur de réseau de l'opérateur, jusqu'au terminal distant auquel l'appel est destiné.

Dans le cas contraire, l'appel sortant est basculé automatiquement et sans coupure (communément dénommé procédure de "handover") sur le réseau GSM payant de l'opérateur.

Or, une telle prise de décision s'avère incompatible avec la mise en oeuvre d'une architecture réseau UMA de type entreprise. En effet, dans une telle architecture, la passerelle de communication sert d'interface entre le réseau mobile local privé (de type IP, par exemple) de l'entreprise et le réseau de communication de l'opérateur. La passerelle doit donc superviser et gérer simultanément une pluralité de points d'accès au réseau local mobile, respectivement répartis sur le site de l'entreprise et, doit en outre assurer la gestion d'un grand nombre de communications d'un parc important de terminaux de communication mobile associés aux collaborateurs de l'entreprise.

Or, il s'avère que le nombre maximal de flux VoIP ("Voix over IP" en anglais, ou "Voix sur IP" en français) que peut transmettre un réseau de communication à un moment donné, et plus particulièrement dans une architecture UMA, est un paramètre important représentatif du niveau de qualité de service (QoS) perçu par les utilisateurs.

En effet, lorsque le nombre de flux VoIP transitant sur le réseau à un instant donné dépasse ce nombre maximal de flux VoIP, la QoS offerte aux usagers se dégrade sensiblement.

Aussi, un inconvénient d'une architecture UMA comprenant plusieurs terminaux mobiles (par exemple du type GSM, GPRS) pouvant se connecter à plusieurs points d'accès (AP) gérés par une passerelle de communication unique (dite passerelle UMA) permettant d'interfacer le réseau IP local privé de l'entreprise avec le coeur de réseau d'un opérateur, est principalement lié à la difficulté de pouvoir garantir et maintenir une QoS constante auprès des utilisateurs, notamment en cas d'afflux important de communications à un instant ou sur une période donnée.

En effet, du nombre important des communications générées dans l'entreprise au quotidien, le nombre maximal de flux VoIP autorisé par l'opérateur sera souvent atteint, avec pour conséquence une dégradation de la qualité des communications qui transiteront via la passerelle de communication UMA.

Pour tenter de répondre à cet inconvénient, certaines approches techniques consistent à évaluer le nombre maximal de flux VoIP pouvant transiter à un instant donné, sur la partie WAN (pour "Wide Area Network" en anglais, ou "réseau large bande" en français) de l'architecture UMA, c'est-à-dire côté coeur de réseau de l'opérateur uniquement.

Une telle approche selon l'art antérieur s'avère cependant limitée en ce qu'elle apporte une réponse uniquement partielle aux inconvénients précités.

En effet, s'il est aujourd'hui possible à un opérateur de déterminer le nombre maximal de flux VoIP pouvant transiter sur la partie WAN de son réseau, soit d'une façon statique par récupération d'une valeur de paramétrage prédéfinie de valeur maximale de flux VoIP autorisée, soit d'une façon dynamique, au moyen d'un algorithme de type CAC (pour "Call Admission Control" en anglais, ou "contrôle d'admission d'une communication" en français), dans l'objectif d'évaluer la possibilité d'ajouter un nouveau flux sur celui-ci, il lui est en revanche impossible de pouvoir évaluer l'impact de l'ajout d'un tel nouveau flux, de bout en bout, à la fois sur la partie WAN, mais surtout sur la partie WLAN d'un réseau mobile privé. Or, le plus souvent, la dégradation de la QoS des communication dans une architecture UMA d'entreprise provient d'une surcharge du réseau mobile privé de cette dernière.

De plus, dans les architectures UMA, le calcul dynamique du nombre de flux VoIP n'existe pas, la norme WMM™ (pour "Wireless Multimedia" en anglais, ou "multimédia sans fil" en français) qui vise à définir des critères et méthodes pour améliorer la qualité de service rendue aux usagers en matière de communication sans fil, précisant à son paragraphe 3.5.2 (Version 1.1 - Wi-Fi Alliance Technical Committee Quality of Service Task Group) qu'une méthode de détermination de la valeur maximale de flux VoIP dans une architecture UMA doit être définie par chaque équipementier.

Cette situation contribue à la difficulté rencontrée aujourd'hui, par les opérateurs et les équipementiers, de pouvoir proposer aux entreprises des offres performantes et attractives de téléphonie basées sur une architecture de type UMA.

La présente invention offre une solution qui ne présente pas les inconvénients mentionnés ci-avant

L'invention vise à résoudre les inconvénients précités en proposant un procédé permettant de calculer et de contrôler le nombre maximum des flux VoIP pouvant transiter à un instant donné et/ou sur une période donnée, aussi bien sur la partie WLAN, que sur la partie WAN (réseau GSM/ GPRS d'un opérateur de téléphonique mobile) et donc, de bout en bout dans une architecture réseau répondant à la norme UMA.

Il s'agit notamment au moyen de la présente invention de pouvoir contrôler l'admission ou le refus de tout nouveau flux de données représentatif d'une nouvelle communication (flux VoIP notamment), dans l'objectif d'assurer aux usagers une constance du niveau de qualité de service qui leur est offert durant leurs communications, au travers une architecture UMA, notamment mise en oeuvre au sein d'une entreprise.

A cet effet, l'invention concerne un procédé de communication entre au moins un premier terminal de communication appartenant à un premier réseau de communication et au moins un deuxième terminal de communication appartenant à un deuxième réseau de communication, lesdits premier et deuxième réseaux étant reliés entre eux via un dispositif d'interface, caractérisé en ce qu'il comprend:

- une étape de calcul dynamique d'une valeur de débit maximal de flux de données pouvant transiter entre les premier et deuxième terminaux, ledit calcul tenant compte de débits observés dans les premier et deuxième réseaux ; et
- une étape de traitement d'une requête d'admission d'un nouveau flux de données sur lesdits premier et deuxième terminaux, ledit traitement étant destiné à être exécuté par ledit dispositif d'interface en tenant compte du résultat de ladite étape de calcul.

La présente invention propose une solution qui permet avantageusement, dans une architecture réseau du type UMA, lorsqu'un premier terminal appartenant à un premier réseau de communication, par exemple du type réseau IP mobile privé WLAN, souhaite établir une nouvelle communication avec un deuxième terminal d'un deuxième réseau de communication, par exemple du type réseau WAN large bande, d'évaluer de bout en bout la disponibilité des ressources disponibles sur le premier et sur le deuxième réseau de communication. Ainsi, en fonction du résultat de cette évaluation, si l'un au moins des deux réseaux ne dispose pas des ressources disponibles, en bande passante notamment, pour laisser passer le flux de données (par exemple de données voix) nécessaire au support de la nouvelle communication, alors on bascule sans coupure cette dernière sur le réseau mobile d'un opérateur.

Préférentiellement, l'étape de traitement est une étape d'analyse dynamique d'au moins un critère de disponibilité associé respectivement à chacun desdits réseaux, telle que :

- si chaque réseau est disponible pour recevoir ledit nouveau flux de données, on réserve, par l'intermédiaire dudit dispositif d'interface, un tunnel de communication dimensionné en fonction du débit nécessaire au support dudit nouveau flux de données, entre ledit premier et ledit deuxième terminal ; et
- si au moins un desdits réseaux n'est pas disponible, on aiguille sans coupure ledit nouveau flux de données vers un réseau de communication mobile.

De façon avantageuse, ladite étape de réservation dudit tunnel de communication comprend au moins une étape préalable de calcul dynamique d'une valeur de débit maximal dudit nouveau flux de données, en fonction d'au moins un paramètre représentatif d'une opération de codage-décodage appliquée audit flux.

Dans un mode de réalisation particulier de l'invention ladite au moins une étape préalable de calcul dynamique est fonction d'au moins un paramètre représentatif d'un type de codeur-décodeur mis eu oeuvre par ledit premier terminal pour traiter ledit flux.

Une telle approche permet avantageusement de calculer une valeur de débit maximal nécessaire pour la transmission du nouveau flux de données, notamment d'un flux du type UMA voix, quel que soit le type du codeur-décodeur associé au terminal appartenant au premier réseau de communication.

Dans un autre mode de réalisation de l'invention, ladite au moins une étape préalable de calcul dynamique est fonction d'au moins un paramètre représentatif d'un mode de fonctionnement d'un codeur-décodeur mis eu oeuvre par ledit premier terminal pour traiter ledit flux.

Dans un mode de réalisation préféré du procédé selon l'invention, ledit deuxième réseau de communication étant du type WAN, comprenant un canal virtuel de communication dont une première extrémité est reliée audit dispositif d'interface et une deuxième extrémité est reliée à un équipement de collecte et de routage, ladite étape d'analyse dynamique est une étape de vérification par ledit dispositif d'interface d'une possibilité d'ajouter ledit nouveau flux de données sur ledit canal virtuel.

Toujours dans le mode de réalisation préféré du procédé selon l'invention, ledit premier réseau (10) de communication étant du type réseau privée sans fils IP libre d'accès comprenant une pluralité de points d'accès ($15_i$, i= 1..N), dit réseau WLAN, ladite étape d'analyse dynamique est une étape de vérification par au moins un point d'accès ($15_i$, i= 1..N) d'une possibilité d'ajouter ledit nouveau flux de données sur ledit premier réseau entre ledit dispositif d'interface et ledit point d'accès.

Préférentiellement, dans le cas d'un appel sortant émis par ledit premier terminal de communication, ledit premier terminal adresse un message de sollicitation porteur d'une demande de réservation de ressources audit dispositif d'interface par l'intermédiaire d'un point d'accès, tel que si ladite demande de réservation de ressources ne peut être satisfaite pour l'émission d'un flux de données par ledit point d'accès, une étape d'émission automatique d'un message de sollicitation de ressource par au moins un autre point d'accès auquel ledit terminal (13) de communication peut se connecter est déclenchée.

De façon également préférentielle, lorsque la réservation de ressources sur le premier réseau a été possible en vue de l'ajout du nouveau flux (flux de données UMA voix, par exemple), le procédé comprend une étape d'ajout dudit nouveau flux de données dans une table de gestion des flux dudit premier réseau (localisée au niveau du dispositif d'interface ou d'au moins un point d'accès) et une étape de vérification par ledit dispositif d'interface d'une possibilité d'ajouter ledit flux de données sur ledit deuxième réseau, telle que si cette possibilité est avérée, on exécute une étape d'ajout dudit nouveau flux de données à une table de gestion des flux dudit deuxième réseau, ladite table étant contenue dans le dispositif d'interface.

Ainsi et d'une façon plus détaillée, lorsqu'un appel sortant est émis par ledit premier terminal de communication pour établir une communication avec ledit deuxième terminal de communication, on exécute les étapes suivantes :

  ▪ étape 1: transmission par ledit premier terminal, d'un message de demande de réservation de ressources pour ledit nouveau flux de données à destination d'au moins un premier point d'accès disponible ;
  ▪ étape 2: vérification par ledit premier point d'accès d'une possibilité d'ajouter ledit nouveau flux audit premier réseau, de façon que si cette possibilité est avérée, on exécute les étapes additionnelles suivantes :

    o transmission par ledit premier point d'accès d'un message de demande de réservation de ressources pour ledit nouveau flux sur ledit deuxième réseau, auprès dudit dispositif d'interface;
    o vérification par ledit dispositif d'interface d'une possibilité d'ajouter ledit nouveau flux sur ledit deuxième réseau, de façon que si cette possibilité est avérée on exécute les étapes additionnelles suivantes:

      • ajout dudit nouveau flux de données à une table de gestion des flux dudit dispositif d'interface ;
      • transmission par ledit dispositif d'interface audit premier point d'accès, d'un message d'acceptation de ladite demande de réservation de ressources, pour ledit nouveau flux de données sur ledit deuxième réseau;
      • ajout dudit nouveau flux de données dans une table de gestion des flux dudit premier réseau;
      • transmission par ledit premier point d'accès audit premier terminal, d'un message d'acceptation de ladite demande de réservation de ressources, pour ledit nouveau flux de données, sur ledit premier réseau;
      • établissement de ladite communication entre ledit premier et ledit deuxième terminal;

et si l'une au moins desdites possibilités d'ajout dudit nouveau flux de données sur le premier ou deuxième réseau n'est pas avérée, on exécute au moins l'une des étapes suivantes :

- pour tout autre point d'accès dudit premier réseau, disponible et distinct dudit premier point d'accès, itération desdites étapes 1 et 2 précitées ;
- aiguillage sans coupure dudit appel sortant vers un réseau de communication mobile.

De façon également préférentielle, dans le cas d'un appel entrant provenant dudit deuxième terminal de communication pour établir une communication avec ledit premier terminal de communication, on exécute les étapes suivantes :

- étape A: transmission par ledit deuxième terminal, d'un message de demande de réservation de ressources pour ledit nouveau flux de données sur ledit deuxième réseau, auprès dudit dispositif d'interface ;
- étape B: vérification par ledit dispositif d'interface d'une possibilité d'ajouter ledit nouveau flux sur ledit deuxième réseau, de façon que si cette possibilité est avérée, on exécute les étapes additionnelles suivantes:

    o transmission par ledit dispositif d'interface d'un message de demande de réservation de ressources pour ledit nouveau flux de données sur ledit premier réseau, à destination d'au moins un premier point d'accès disponible auquel ledit premier terminal est connecté ;
    o vérification par ledit premier point d'accès disponible d'une possibilité d'ajouter ledit nouveau flux audit premier réseau, de façon que si cette possibilité est avérée, on exécute les étapes additionnelles suivantes:

    - ajout dudit nouveau flux de données dans une table de gestion des flux dudit premier réseau ;
    - transmission par ledit point d'accès disponible audit dispositif d'interface, d'un message d'acceptation de ladite demande de réservation de ressources pour ledit nouveau flux sur ledit premier réseau ;
    - ajout dudit nouveau flux de données dans une table de gestion des flux de données dudit deuxième réseau ;
    - établissement de ladite communication entre ledit premier et ledit deuxième terminal;

et si l'une au moins desdites possibilités d'ajout dudit nouveau flux de données sur le premier ou deuxième réseau n'est pas avérée, on exécute au moins l'une des étapes suivantes :

- pour tout autre point d'accès dudit premier réseau, disponible et distinct dudit premier point d'accès disponible, itération desdites étapes A et B précitées;
- aiguillage sans coupure dudit appel sortant vers un réseau de communication mobile.

Préférentiellement, ledit nouveau flux de données est un flux du type UMA voix.

L'invention concerne également un système de communication entre au moins un premier terminal de communication appartenant à un premier réseau de communication et au moins un deuxième terminal de communication appartenant à un deuxième réseau de communication, lesdits premier et deuxième réseaux étant reliés entre eux via un dispositif d'interface, caractérisé en ce qu'il comprend:

- des moyens de calcul dynamique d'une valeur de débit maximal de flux de données pouvant transiter entre ledit premier terminal et ledit deuxième terminal, lesdits moyens de calcul tenant compte d'au moins une valeur de débit observée dans les premier et/ou deuxième réseaux de communication ; et
- des moyens de traitement d'une requête d'admission d'un nouveau flux de données sur lesdits premier et deuxième terminaux, ledit traitement étant destiné à être exécuté par ledit dispositif d'interface en tenant compte du résultat produit par lesdits moyens de calcul.

Préférentiellement, dans le système selon l'invention, ledit premier terminal de communication est conforme au standard défini par la norme UMA.

L'invention concerne encore un produit programme d'ordinateur téléchargeable depuis un réseau de communication et/ou stocké sur un support d'information lisible par ordinateur et/ou exécutable par un microprocesseur, ledit programme comprenant des instructions de code pour l'exécution d'un procédé de communication précité.

Les caractéristiques et avantages techniques de la présente invention ressortiront mieux de la description suivante, faite à titre indicatif et non limitatif, au regard des dessins annexés sur lesquels:

- la figure 1 est une vue schématique d'une architecture dans laquelle sont mis en oeuvre un système et un procédé de communication selon l'invention ;

- la figure 2 est un ordinogramme d'un mode de mise en oeuvre du procédé de communication selon l'invention, dans le cas d'un appel entrant;
- la figure 3 est un ordinogramme d'un mode de mise en oeuvre du procédé de communication selon l'invention, dans le cas d'un appel sortant.

La présente invention propose une solution qui permet, dans une architecture réseau du type UMA, lorsqu'un premier terminal appartenant à un premier réseau de communication, par exemple du type réseau IP mobile privé WLAN, souhaite établir une nouvelle communication avec un deuxième terminal d'un deuxième réseau de communication, par exemple du type réseau WAN large bande, d'évaluer de bout en bout la disponibilité des ressources disponibles sur le premier et sur le deuxième réseau de communication. Ainsi, en fonction du résultat de cette évaluation, si l'un au moins des deux réseaux ne dispose pas des ressources disponibles, en bande passante notamment, pour laisser passer le flux de données (par exemple de données voix) nécessaire au support de la nouvelle communication, alors on bascule sans coupure cette dernière sur le réseau mobile d'un opérateur.

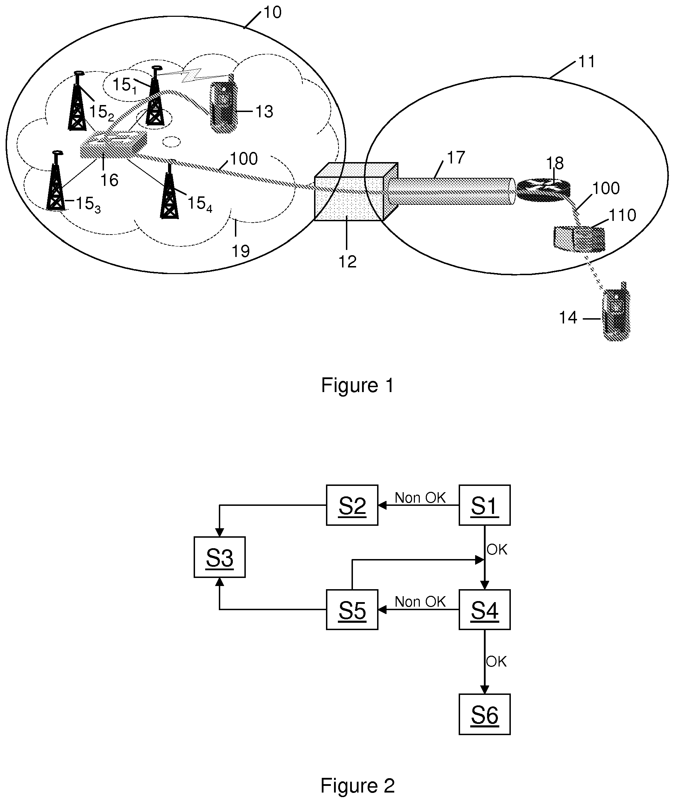

La figure 1 illustre une architecture réseau du type UMA dans laquelle l'invention peut être mise en oeuvre. Une telle architecture comprend une première partie 10 correspondant à un premier réseau 10 de communication local sans fil, dit réseau WLAN, par exemple du type réseau IP mobile local privé et, une deuxième partie 11, correspondant à la partie coeur de réseau, du réseau WAN d'un opérateur. Un équipement matériel 12 formant dispositif d'interface permet de prolonger les services de communication entre le réseau 10 WLAN et le réseau 11 WAN, notamment pour ce qui concerne les communications établies entre un premier terminal 13 de radiocommunication du réseau WLAN et un deuxième terminal 14 de communication distant, atteint par l'intermédiaire d'au moins un équipement 18 de collecte et/ou de routage, et/ou d'au moins une passerelle 110 sécurisé, du réseau WAN.

Le réseau 10 WLAN comprend une pluralité de points $15_1$, $15_2$, $15_3$, $15_4$ d'accès reliés au dispositif 12 d'interface par l'intermédiaire d'un commutateur 16 de type Ethernet, l'ensemble des points d'accès, y compris le dispositif 12 d'interface, définissant une zone 19 de couverture (dite "business zone" selon la terminologie anglophone communément adoptée) pour le réseau 10 IP local mobile, au sein de laquelle les terminaux 13 de communication sont reconnus.

Les terminaux 13 sont conformes à la norme UMA (Technical Specification Group GSM/EDGE Radio Access Network; Generic Access to the A/Gb interface; Stage 2 - version 6- janvier 2006) et la "business zone" 19 est conforme à la norme WMM (WMM™ - Version 1.1 - Wi-Fi Alliance Technical Committee Quality of Service Task Group).

La "Business Zone" 19 possède un serveur DHCP situé sur le dispositif 12 d'interface. Le dispositif 12 d'interface effectue du NAT (1 vers N) sur son interface WAN.

L'adresse IP source d'un paquet IPsec (sécurisé) transmis par un terminal 13 UMA à destination d'une passerelle sécurisée 110 du réseau 11 WAN, provient de la plage d'adresses IP administré par le serveur DHCP de la "Business Zone" 19.

Un canal 17 virtuel conversationnel (CV) de communication est établi sur la partie 11 WAN de l'architecture UMA, entre le dispositif 12 d'interface et un équipement 18 de collecte et de routage du réseau 11 WAN, ce dernier formant point d'entrée du point de présence (PoP) multiservices, dont le service de voix sur IP.

L'établissement d'une connexion sécurisée entre un terminal 13 et la passerelle 110 sécurisée nécessite *(i)* la détection de la présence de la fonction NAT sur l'interface WAN du dispositif d'interface et *(ii)* l'authentification des deux extrémités de la connexion. La connexion sécurisée est établie suivant le protocole IKEv2.

Les différentes étapes d'établissement d'une connexion sécurisée entre le terminal 13 et la passerelle 110 sécurisée du réseau WAN ne sont pas détaillées ici.

En se référant à l'architecture de la figure 1, le nombre maximal de flux UMA voix pouvant transiter de bout en bout sur le premier 10 et deuxième 11 réseau de communication, correspond sensiblement au minima entre *(i)* le nombre maximal de flux UMA voix que peut transmettre le CV 17 conversationnel et *(ii)* le nombre maximal de flux UMA voix que peut transmettre la "business zone" 19.

Le CV 17 conversationnel transmet les flux de téléphonie fixe, les flux UMA voix, les flux d'établissement et de maintien des connexions sécurisées, ainsi que d'autres flux UMA de données transitant sur la partie 12 du réseau WAN.

A un instant *t*, le nombre maximal de flux UMA voix que peut transmettre le VC conversationnel est appelé CAC UMA CV conversationnel. Il est calculé en sens montant ("uplink") ou descendant ("downlink"), car il est bidirectionnel.

En outre, chaque réseau local mobile, par exemple de type Wifi, présent dans la "business zone" 19 peut transmettre des flux UMA voix, des flux d'établissement et de maintien des connexions sécurisées, ainsi que d'autres flux divers UMA et/ou de données.

Au même instant *t*, le nombre maximal de flux UMA voix que peut transmettre un réseau Wifi de la "business zone" 19 est appelé CAC UMA WLAN. Il est aussi calculé en sens montant ("uplink") ou en sens descendant ("downlink"), car il est également bidirectionnel.

Le nombre maximal de flux UMA voix dans une architecture UMA, telle que celle représentée sur la figure 1, dépend donc du CAC UMA CV conversationnel et du CAC UMA WLAN.

a) Calcul du CAC UMA CV conversationnel :

Le calcul du CAC UMA VC conversationnel nécessite la connaissance *(i)* du débit du CV conversationnel *(ii)* et du débit d'un flux UMA voix. Les débits sont calculés au niveau ATM (pour "Asynchronous Transfer Mode" en anglais, c'est-à-dire "mode de transfert asynchrone" en français).

A l'instant *t*, le nombre maximal de flux transmis sur le CV 17 conversationnel est tel que :

$$\text{(Débit du VC conversationnel)}(t) = \text{(Débit des flux de téléphonie fixe)}(t) +$$

$$\text{(Débit des flux UMA voix)}(t) + \text{(Débit des flux UMA data)}(t) + \text{(Débit des flux}$$

$$\text{d'établissement des tunnels IPsec)}(t) + \text{(Débit de maintien des tunnels IPsec)}(t).$$

A l'instant *t*, le nombre maximal de flux UMA est tel que :

$$\text{(Débit des flux UMA)}(t) = \text{(Débit du VC conversationnel)}(t) - \text{(Débit des flux de}$$

$$\text{téléphonie fixe)}(t), \text{ noté par simplification Dvc} - \text{Dtoip}(t).$$

A un instant $t_k$, le CV 17 conversationnel transmet (k -1) flux UMA voix.

Ainsi, la possibilité d'ajouter le flux UMA voix numéro *k* nécessite donc de connaître quel débit maximal va occuper ce flux k sur le CV 17 conversationnel, côté réseau WAN.

Le débit au niveau ATM du flux UMA voix numéro *k*, noté "débit du flux UMA voix n° *k*", est égal au nombre de paquets par seconde émis par le codec multiplié par la longueur d'un paquet au niveau ATM, le codec du flux UMA voix numéro *k* étant lui-même caractérisé par les deux paramètres suivants :

- $R_k$ : nombre de paquets par seconde émis par le codec;
- (débit du codec)$_k$ : débit maximal du codec en bps.

Aussi obtient-on la formule suivante de calcul du débit maximal du flux UMA voix n° *k*, noté (débit du flux UMA voix n° *k*)$_{max}$, lorsque le codec ne fait pas de VAD, c'est-à-dire que, lorsque (débit du codec(t))$_k$ = (débit du codec)$_k$ :

$$\text{(débit du flux UMA voix n° } k)_{max} =$$

$$R_k * (\text{(débit du codec)}_k / R_k + \text{longueur (entête (PLCP-MAC-CCMP-LLC-IPsec-IP))}) +$$

$$\text{longueur(trame d'acquittement)} + \text{SIFS} * \text{Dwlan}) + (Rk(t) - 1) * \text{SIFS} * \text{Dwlan} +$$

$$\text{(TIME\_FOR\_THE\_CLASS\_TO\_TRANSMIT)}_k * \text{Dwlan} ;$$

où:

- les bits n'appartenant pas au champ de VoIP sont notés "entête(PLCP-MAC-CCMP-LLC-IPsec-IP)";
- Dwlan correspond au débit sur le réseau WLAN;
- selon le paragraphe "Obtaining an EDCA TXOP" de la spécification WMM™ (WMM™ - Version 1.1, Wi-Fi Alliance Technical Committee Quality of Service Task Group), l'autorisation à transmettre un nouveau flux correspond au temps que doit attendre la classe AC_VO (classe correspondant à la catégorie d'accès de type "voix") avant de pouvoir transmettre ses trames protocolaires PLCP sur le réseau Wifi. Cette durée est notée (TIME_FOR_THE_CLASS_TO_TRANSMIT)$_k$.

Les caractéristiques du codec d'un terminal sont indispensables au calcul du débit maximal d'un flux UMA voix.

Tel que préconisé par le Consortium 3GPP (marque déposée), les valeurs de débit et de nombre de paquets par seconde émis par le codec AMR - "Adaptive Multi-Rate" (pour "à taux multiple adaptatif') (Cf. "Technical Specification Group GSM/EDGE Radio Access Network; Generic Access to the A/Gb interface; étape 2, Version 6, janvier 2006) utilisé dans les téléphones mobiles de troisième génération, pourront être ici considérées dans l'équation précitée.

b) Ajout du flux n° *k* sur le CV 17 conversationnel :

On suppose que le flux UMA voix n° i est transmis sur le CV 17 conversationnel depuis un instant *ti.* Le débit du flux UMA voix n° i, mesuré entre les instants *ti* et $t_k$, est alors égal à :

$$(\text{débit du flux UMA voix n° i})_{\text{mesuré entre } [ti, tk]} = (\text{nombre de bits du flux UMA voix n°}$$

$$i)_{\text{mesuré entre } [ti, tk]} / (t_k - t_i).$$

L'addition des (k - 1) flux est notée $\Sigma i$ = SIGMA (i = 1, i = k-1).

A l'instant $t_k$ l'ajout du flux UMA voix n° *k* (identifié de façon unique) sur le CV 17 conversationnel est possible si l'équation *EQ1* suivante est vérifiée :

$$\Sigma i \, (\text{débit du flux UMA voix n° i})_{\text{mesuré en uplink entre } [ti, tk]} + \Sigma i \, (\text{débit du flux UMA}$$

$$\text{voix n° i})_{\text{mesuré en downlink entre } [ti, tk]} + 2*(\text{débit du flux UMA voix n° k})_{\text{max}} < (Dvc -$$

$$Dtoip(t))_{\text{uplink}} + (Dvc - Dtoip(t))_{\text{downlink}}.$$

c) Calcul du CAC UMA WLAN :

Le calcul du CAC UMA WLAN nécessite la connaissance *(i)* du débit du réseau mobile privé, dans le présent mode de réalisation décrit, un réseau de type WiFi et *(ii)* du débit d'un flux UMA voix. Les débits sont donc calculés au niveau radio.

La "business zone" 19 possède un ou plusieurs réseaux définis respectivement par leur point d'accès $15_1$, $15_2$, $15_3$, $15_4$ respectifs conformes à la norme 802.11b/g.

Le débit nominal d'un réseau WiFi est noté dans la suite Dwlan.

A l'instant *t* le débit d'un réseau WiFi est noté D(t) et à ce même instant *t,* le nombre maximal de flux transmis est calculé sur le réseau WiFi de la façon suivante :

$$D(t) = (\text{Débit des flux UMA voix})(t) + (\text{Débit des flux UMA data})(t) + (\text{Débit}$$

$$\text{des flux d'établissement des tunnels IPsec})(t) + (\text{Débit de maintien des tunnels}$$

$$\text{IPsec})(t) + (\text{Débit de divers flux})(t).$$

A l'instant *t*, le nombre maximal de flux UMA est donc tel que :

$$(\text{Débit des flux UMA})(t) = D(t).$$

A un instant $t_k$ correspondant à une tentative d'établissement d'une nouvelle connexion, le réseau WiFi transmet déjà (k -1) flux UMA voix et donc, la possibilité d'ajouter le flux UMA voix numéro *k* nécessite de connaître la valeur de débit maximal que va occuper ce flux sur le réseau WiFi.

d) Calcul du débit maximal du flux UMA voix n° *k* :

Le débit au niveau radio du flux UMA voix numéro *k,* noté "débit du flux UMA voix n° *k*", est égal au nombre de paquets par seconde émis par le codec multiplié par la longueur d'un paquet au niveau radio. L'émission d'une trame WiFi contenant un échantillon de voix sur IP (VoIP) est équivalente à l'émission d'une trame WiFi virtuelle contenant cet échantillon, ce qui implique qu'au niveau radio, le débit du flux UMA voix numéro *k* est alors égal à :

$$(\text{débit du flux UMA voix n° k})(t) = R_k(t)*(\text{ longueur (trame WiFi n° k) +}$$

$$\text{longueur(acquittement de trame)} + t_{\text{sifs}}*\text{Dwlan}),$$

où $t_{sifs}$ correspond à la durée de l'espace court inter trame (sifs = "Short Inter Frame Space" en anglais, ou "interval court inter-trame" en français).

e) Ajout du flux UMA voix n° *k* sur le réseau WiFi :

On suppose que le flux UMA voix n° i est transmis sur le réseau WiFi depuis l'instant $t_i$.

A l'instant $t_k$ l'ajout du flux UMA voix n° *k* sur le réseau 11 WLAN - WiFi est donc possible si l'équation *EQ2* est vérifiée :

$$\Sigma i \text{ (débit du flux UMA voix n° i)}_{mesuré\ en\ uplink\ entre\ [ti,\ tk]} + \Sigma i \text{ (débit du flux UMA voix n° i)}_{mesuré\ en\ downlink\ entre\ [ti,\ tk]} + \text{(débit du flux UMA voix uplink n° k)}_{max} + \text{(débit du flux UMA voix downlink n° k)}_{max} < D(t_k)$$

f) Etablissement d'une nouvelle communication entre un terminal de communication 13 du réseau 10 WLAN et un terminal 14 reconnu du réseau 11 WAN :

A l'instant $t_k$ correspondant à un instant de demande d'établissement d'une nouvelle communication voix entre un terminal 13 de communication du réseau 10 local sans fil (par exemple un réseau WiFi) et un terminal 14 de communication reconnu par le réseau 11 WAN, l'ajout du flux UMA voix n° *k* sur le canal 17 virtuel conversationnel est alors possible si les équations *EQ1* et *EQ2* sont vérifiées. Il existe donc deux scénarii d'ajout d'un flux suivant qu'il s'agit d'un appel sortant ou d'un appel entrant.

Si l'une au moins des deux équations *EQ1* et *EQ2* n'est pas vérifiée, cela signifie que l'ajout d'un flux UMA voix n°*k* pour le support d'une nouvelle communication (cas d'un appel entrant ou sortant, indépendamment) dont l'établissement est demandé, à un instant $t_k$, n'est pas possible, sans une dégradation sensible de la qualité de service du services de VoIP rendue aux utilisateurs de l'architecture UMA de la figure 1, en cours de communication.

Dans une telle situation, on procède alors à un basculement sans coupure de la communication en cours d'établissement (procédure de "handover" selon la terminologie anglophone communément adoptée) sur le réseau mobile d'un opérateur.

- Cas d'un appel entrant, initié depuis un terminal 14 de communication, à destination d'un terminal 13 de communication :

Comme illustré sur la figure 2, lorsque l'équipement 12 d'interface reçoit sur son interface WAN un message de type requête CAC UMA concernant le canal 17 virtuel conversationnel, il vérifie l'équation *EQ1* précitée (étape S1.).

Si l'équation *EQ1* est fausse, l'équipement 12 d'interface transmet un message de réponse CAC UMA concernant le canal 17 virtuel conversationnel, dont le champ "Status Code" est positionné à la valeur "Deny" (refus d'ajout d'un nouveau flux UMA voix) à destination du point d'accès $15_1$, dans la zone de couverture duquel se situe un terminal 13 avec lequel un terminal 14 cherche à entrer en communication (étape S2). En conséquence, le flux UMA voix n° k n'est alors pas transmis sur l'interface LAN du dispositif d'interface 12.

La communication doit alors être établie sans passer par l'architecture UMA, mais en s'appuyant, par exemple sur le réseau GSM d'un opérateur (étape S3).

Dans la situation inverse, si l'équation *EQ1* est vérifiée, alors l'équipement 12 d'interface ajoute le flux UMA voix numéro *k* dans une table de gestion et de référencement des flux UMA voix transitant sur la canal 17 virtuel conversationnel, puis transmet un message de réponse CAC UMA concernant le canal 17 virtuel conversationnel, dont le champ "Status Code" est positionné à la valeur "Accept" (ajout du champ accepté) à destination du point d'accès $15_1$ (AP), dans la zone de couverture duquel se situe un terminal 13 avec lequel un terminal 14 cherche à entrer en communication (étape S4).

Lorsque l'AP $15_1$ reçoit un message de réponse CAC UMA concernant le canal 17 virtuel conversationnel, il vérifie la valeur du champ "Status Code".

Si ce champ contient la valeur "Deny", l'AP $15_1$ transmet, conformément au standard WMM, un message de réponse ADDTS ayant le champ "Status Code" positionné à la valeur "Deny" à destination du terminal 13 (étape S5).

Si au contraire le champ "Status Code" contient la valeur "Accept", l'AP $15_1$ vérifie l'équation *EQ2*.

Si l'équation EQ2 est vérifiée le point d'accès $15_1$ ajoute le flux UMA voix numéro *k* dans la table des flux UMA voix du réseau 10 WiFi, puis transmet, conformément au standard WMM, un message de réponse ADDTS ayant le champ "Status Code" positionné à la valeur "Accept" à destination du terminal 13 (étape S6).

La communication 100 est alors établie, de bout en bout, via l'architecture UMA de la figure 1, entre le terminal 13 de communication du réseau 10 WLAN et le terminal 14 de communication rattaché au réseau 11 WAN.

Dans le cas contraire, lorsqu'un terminal 13 de communication, conforme à la spécification UMA, reçoit un message de réponse ADDTS ayant son champ "Status Code" positionné à la valeur "Deny" *(i)* il peut chercher un autre AP disponible, parmi les AP $15_2$ à $15_4$, ou bien *(ii)* il peut initier une procédure de basculement automatique, sans coupure (procédure de "handover") vers le réseau GSM d'un opérateur (étape S3).

- Cas d'un appel sortant, initié depuis un terminal 13 de communication, à destination d'un terminal 14 de communication :

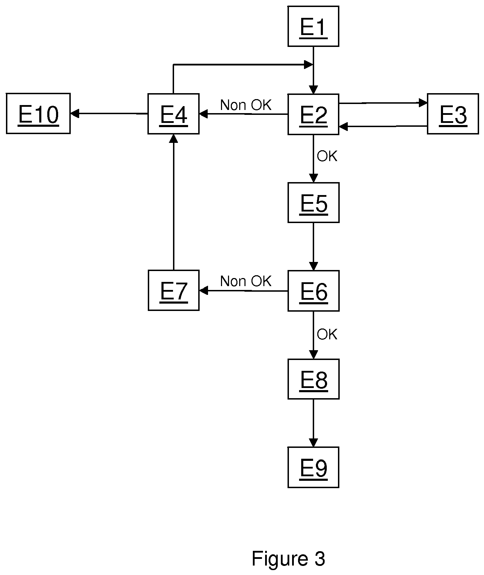

Comme illustré sur l'ordinogramme de la figure 3, à un instant $t_k$ correspondant un l'initiation d'un appel sortant par une terminal 13 du réseau WLAN, en vue de l'établissement d'une nouvelle communication avec un terminal 14 distant, reconnu d'un réseau 11 WAN, conformément à la spécification WMM™, un terminal émet un message contenant une requête ADDTS destinée à réserver des ressources sur son le réseau WiFi auquel le terminal 13 est rattaché (étape E1), pour le flux UMA voix numéro k, destiné à supporté cette nouvelle communication.

A la réception de ce message, l'AP $15_1$ doit vérifier l'équation *EQ2* (étape E2).

Si la table des codecs des terminaux administrée par l'AP $15_1$ ne contient pas les paramètres du codec du terminal 13, nécessaires à la vérification de l'équation *EQ2*, l'AP $15_1$ émet un message de demande de récupération de la valeur du codec correspondant au terminal 13, à destination de l'équipement 12 d'interface (étape E3). Ce dernier renvoie alors à l'AP $15_1$ un message de réponse contenant la valeur du codec requise, cette dernière étant intégrée à la table des codecs de l'AP $15_1$.

Tel que précité, les valeurs des débits et de nombre de paquets par seconde émis par le codec AMR seront préférentiellement utilisés dans l'équation *EQ2* à vérifier.

Si l'équation *EQ2* est fausse, l'AP $15_1$ transmet, conformément à la spécification WMM™, un message de réponse ADDTS avec un champ "Status Code" positionné à la valeur "Deny", à destination du terminal 13 de communication (étape E4).

Au contraire, si l'équation *EQ2* est vérifiée, l'AP $15_1$ transmet un message de requête de CAC UMA concernant le canal 17 virtuel conversationnel à destination de l'équipement 12 d'interface (étape E5).

Lorsque ce dernier 12 ce dernier message, il vérifie l'équation *EQ1* (étape E6).

Si l'équation *EQ1* est fausse, l'équipement 12 d'interface transmet un message de réponse CAC UMA concernant le canal 17 virtuel avec un champ "Status Code" positionné à la valeur "Deny" à destination de l'AP $15_1$ (étape E7).

Si au contraire l'équation *EQ1* est vérifiée, l'équipement 12 ajoute le flux UMA voix numéro *k* dans sa table des flux UMA voix relative aux flux UMA transitant sur le canal 17 virtuel, puis transmet un message de réponse CAC UMA ayant le champ "Status Code" positionné à la valeur "Accept" à destination de l'AP $15_1$ (étape E8).

Lorsque l'AP $15_1$ reçoit un message de réponse CAC UMA concernant le canal 17 virtuel avec une valeur du champ "Status Code" positionnée à "Deny", l'AP $15_1$ transmet, conformément à la spécification WMM™, un message de réponse ADDTS avec un champ "Status Code" positionné à la valeur "Deny" à destination du terminal 13 (étape E4).

Si le champ "Status Code" de ce dernier message contient la valeur "Accept", l'AP $15_1$ ajoute le flux UMA voix n° k dans la table des flux UMA voix du réseau 10 WiFi, puis transmet, conformément à la spécification WMM™, un message de réponse ADDTS ayant le champ "Status Code" positionné à la valeur "Accept" à destination du terminal (étape E9).

Dans ce cas, la communication 100 est alors établie au travers l'architecture UMA de la figure 1.

En revanche, lorsqu'un terminal 13 UMA reçoit un message de réponse ADDTS avec un champ "Status Code" positionné à la valeur "Deny" soit *(i)* il peut chercher un autre AP $15_2$, $15_3$ ou $15_4$ si le premier $15_1$ n'était pas disponible, soit *(ii)* il peut initier une procédure de basculement automatique et sans coupure (procédure de "handover") vers le réseau GSM d'un opérateur (étape E10).

**Revendications**

1. Procédé de communication entre au moins un premier terminal (13) de communication appartenant à un premier réseau (10) de communication et au moins un deuxième terminal (14) de communication appartenant à un deuxième réseau (11) de communication, lesdits premier (10) et deuxième (11) réseaux étant reliés entre eux via un dispositif (12) d'interface comprenant:

   ▪ une étape de calcul dynamique d'une valeur de débit maximal de flux de données pouvant transiter entre les premier et deuxième terminaux (13) (14), ledit calcul tenant compte de débits observés dans les premier (10) et deuxième (11) réseaux ;
   ▪ une étape de traitement d'une requête d'admission d'un nouveau flux de données entre lesdits premier et deuxième terminaux (13) (14), ledit traitement étant exécuté par ledit dispositif (12) d'interface en tenant compte du résultat produit à ladite étape de calcul ; et

▪ une étape d'aiguillage sans coupure dudit nouveau flux de données vers un réseau de communication mobile, si au moins un desdits réseaux n'a pas suffisamment de ressources disponibles.

**2.** Procédé selon la revendication 1, **caractérisé en ce que** ladite étape de traitement est une étape d'analyse dynamique d'au moins un critère de disponibilité associé respectivement à chacun desdits réseaux (10) et (11), telle que :

▪ si chaque réseau (10) et (11) est disponible pour recevoir ledit nouveau flux de données, on réserve, par l'intermédiaire dudit dispositif d'interface, un tunnel de communication dimensionné en fonction du débit nécessaire au support dudit nouveau flux de données, entre ledit premier (13) et ledit deuxième (14) terminal.

**3.** Procédé selon la revendication 2, **caractérisé en ce que** ladite étape de réservation dudit tunnel de communication comprend au moins une étape préalable de calcul dynamique d'une valeur de débit maximal dudit nouveau flux de données, en fonction d'au moins un paramètre représentatif d'une opération de codage-décodage appliquée audit flux.

**4.** Procédé selon la revendication 3, **caractérisé en ce que** ladite au moins une étape préalable de calcul dynamique est fonction d'au moins un paramètre représentatif d'un type de codeur-décodeur mis eu oeuvre par ledit premier terminal pour traiter ledit flux.

**5.** Procédé selon l'une des revendications 3 et 4, **caractérisé en ce que** ladite au moins une étape préalable de calcul dynamique est fonction d'au moins un paramètre représentatif d'un mode de fonctionnement d'un codeur-décodeur mis eu oeuvre par ledit premier terminal pour traiter ledit flux.

**6.** Procédé selon l'une quelconque des revendications 2 et 3, **caractérisé en ce que** ledit deuxième réseau (11) de communication étant du type WAN, comprenant un canal (17) virtuel de communication dont une première extrémité est reliée audit dispositif (12) d'interface et une deuxième extrémité est reliée à un équipement (18) de collecte et de routage, ladite étape d'analyse dynamique est une étape de vérification par ledit dispositif (12) d'interface d'une possibilité d'ajouter ledit nouveau flux de données sur ledit canal (17) virtuel.

**7.** Procédé selon l'une quelconque des revendications 2 à 6, **caractérisé en ce que** ledit premier réseau (10) de communication étant du type réseau sans fils comprenant une pluralité de points d'accès (15$_i$, i= 1..N), dit réseau WLAN, ladite étape d'analyse dynamique est une étape de vérification par au moins un point d'accès (15$_i$, i= 1..N) d'une possibilité d'ajouter ledit nouveau flux de données sur ledit premier réseau (10) entre ledit dispositif (12) d'interface et ledit point d'accès.

**8.** Procédé selon l'une quelconque des revendications 6 et 7, **caractérisé en ce que** dans le cas d'un appel sortant émis par ledit premier terminal (13) de communication, ledit premier terminal (13) adresse un message de sollicitation porteur d'une demande de réservation de ressources audit dispositif (12) d'interface par l'intermédiaire d'un point d'accès, tel que si ladite demande de réservation de ressources ne peut être satisfaite pour l'émission d'un flux de données par ledit point d'accès, une étape d'émission automatique d'un message de sollicitation de ressource par au moins un autre point d'accès auquel ledit terminal (13) de communication peut se connecter est déclenchée.

**9.** Procédé selon la revendication 8, **caractérisé en ce qu'**il comprend une étape d'ajout dudit nouveau flux de données dans une table de gestion des flux dudit premier réseau (10) et une étape de vérification par ledit dispositif (12) d'interface d'une possibilité d'ajouter ledit flux de données sur ledit deuxième réseau, telle que si cette possibilité est avérée, on exécute une étape d'ajout dudit nouveau flux de données à une table de gestion des flux dudit dispositif (12).

**10.** Procédé selon l'une quelconque des revendications 1 à 7, **caractérisé en ce que** ledit premier terminal (13) étant conforme au standard UMA, ledit flux de données est un flux du type UMA voix.

**11.** Système de communication entre au moins un premier terminal (13) de communication appartenant à un premier réseau (10) de communication et au moins un deuxième terminal (14) de communication appartenant à un deuxième réseau (11) de communication, lesdits premier (10) et deuxième (11) réseaux étant reliés entre eux via un dispositif (12) d'interface comprenant:

▪ des moyens de calcul dynamique d'une valeur de débit maximal de flux de données pouvant transiter entre ledit premier terminal (13) et ledit deuxième terminal (14), lesdits moyens de calcul tenant compte d'au moins une valeur de débit observée dans les premier (10) et deuxième (11) réseaux de communication ;

▪ des moyens de traitement d'une requête d'admission d'un nouveau flux de données entre lesdits premier et deuxième terminaux (13) (14), ledit traitement étant exécuté par ledit dispositif (12) d'interface en tenant compte du résultat produit par lesdits moyens de calcul ; et

▪ des moyens d'aiguillage sans coupure du nouveau flux de données vers un réseau de communication mobile, si au moins un desdits réseaux n'a pas suffisamment de ressources disponibles.

12. Système de communication selon la revendication 11, **caractérisé en ce que** ledit premier (13) terminal de communication est conforme au standard défini par la norme UMA.

13. Produit programme d'ordinateur téléchargeable depuis un réseau de communication et/ou stocké sur un support d'information lisible par ordinateur et/ou exécutable par un microprocesseur, **caractérisé en ce qu'**il comprend des instructions de code pour l'exécution d'un procédé de communication conforme à l'une quelconque des revendications 1 à 10.

**Patentansprüche**

1. Verfahren für die Kommunikation zwischen wenigstens einem ersten Kommunikationsendgerät (13), das zu einem ersten Kommunikationsnetz (10) gehört, und wenigstens einem zweiten Kommunikationsendgerät (14), das zu einem zweiten Kommunikationsnetz (11) gehört, wobei das erste Netz (10) und das zweite Netz (11) miteinander über eine Schnittstellenvorrichtung (12) verbunden sind, das Folgendes umfasst:

   - einen Schritt des dynamischen Berechnens eines maximalen Durchsatzwertes eines Datenflusses, der zwischen dem ersten Endgerät (13) und dem zweiten Endgerät (14) transportiert werden kann, wobei die Berechnung Durchsätze berücksichtigt, die in dem ersten Netz (10) und in dem zweiten Netz (11) beobachtet werden;
   - einen Schritt des Bearbeitens einer Anforderung zum Zulassen eines neuen Datenflusses zwischen dem ersten Endgerät (13) und dem zweiten Endgerät (14), wobei die Verarbeitung durch die Schnittstellenvorrichtung (12) unter Berücksichtigung des im Berechnungsschritt erzeugten Ergebnisses ausgeführt wird; und
   - einen Umleitungsschritt ohne Unterbrechung des neuen Datenflusses zu einem Mobilkommunikationsnetz, falls wenigstens eines der Netze keine ausreichenden verfügbaren Betriebsmittel hat.

2. Verfahren nach Anspruch 1, **dadurch gekennzeichnet, dass** der Verarbeitungsschritt ein Schritt des dynamischen Analysierens wenigstens eines Verfügbarkeitskriteriums, das jedem der Netze (10) und (11) zugeordnet ist, ist, derart, dass:

   - dann, wenn jedes Netz (10) und (11) verfügbar ist, um den neuen Datenfluss zu empfangen, über die Schnittstellenvorrichtung ein Kommunikationstunnel, der als Funktion des Durchsatzes, der für die Unterstützung des neuen Datenflusses erforderlich ist, dimensioniert ist, zwischen dem ersten Endgerät (13) und dem zweiten Endgerät (14) reserviert wird.

3. Verfahren nach Anspruch 2, **dadurch gekennzeichnet, dass** der Schritt des Reservierens des Kommunikationstunnels wenigstens einen vorherigen Schritt des dynamischen Berechnens eines maximalen Durchsatzwertes des neuen Datenflusses als Funktion wenigstens eines Parameters, der eine auf den Fluss angewendete Codierungs-/Decodierungsoperation repräsentiert, umfasst.

4. Verfahren nach Anspruch 3, **dadurch gekennzeichnet, dass** der wenigstens eine vorhergehende Schritt des dynamischen Berechnens eine Funktion wenigstens eines Parameters ist, der einen Typ eines Codierers/Decodierers repräsentiert, der von dem ersten Endgerät verwendet wird, um den Fluss zu verarbeiten.

5. Verfahren nach einem der Ansprüche 3 und 4, **dadurch gekennzeichnet, dass** der wenigstens eine vorhergehende Schritt des dynamischen Berechnens eine Funktion wenigstens eines Parameters ist, der eine Betriebsart eines Codierers/Decodierers repräsentiert, der von dem ersten Endgerät verwendet wird, um den Fluss zu verarbeiten.

6. Verfahren nach einem der Ansprüche 2 und 3, **dadurch gekennzeichnet, dass** das zweite Kommunikationsnetz (11) vom Typ WAN ist, der einen virtuellen Kommunikationskanal (17) enthält, wovon ein erstes Ende mit der Schnittstellenvorrichtung (12) verbunden ist und ein zweites Ende mit einem Sammel- und Lenkungsgerät (18) verbunden ist, wobei der Schritt des dynamischen Analysierens ein Schritt des Verifizierens durch die Schnittstellenvorrichtung (12) einer Möglichkeit, den neuen Datenfluss zu dem virtuellen Kanal (17) hinzuzufügen, ist.

7. Verfahren nach einem der Ansprüche 2 bis 6, **dadurch gekennzeichnet, dass** das erste Kommunikationsnetz (10) von Typ drahtloses Netz ist, das mehrere Zugriffspunkte (15$_i$, i = 1, ..., N) enthält und WLAN-Netz genannt wird, wobei der Schritt des dynamischen Analysierens ein Schritt des Verifizierens durch wenigstens einen Zugriffspunkt (15$_i$, i = 1, ..., N) einer Möglichkeit, den neuen Datenfluss zu dem ersten Netz (10) zwischen der Schnittstellenvorrichtung (12) und dem Zugriffspunkt hinzuzufügen, ist.

8. Verfahren nach einem der Ansprüche 6 und 7, **dadurch gekennzeichnet, dass** im Fall eines ausgehenden Anrufs, der von dem ersten Kommunikationsendgerät (13) ausgeht, das erste Endgerät (13) eine Beanspruchungsnachricht, die eine Betriebsmittelreservierungsanforderung führt, an die Schnittstellenvorrichtung (12) über einen Zugriffspunkt adressiert, derart, dass dann, wenn die Betriebsmittelreservierungsanforderung für die Aussendung eines Datenflusses durch den Zugriffspunkt nicht erfüllt werden kann, ein Schritt des automatischen Aussendens einer Betriebsmittelbeanspruchungsnachricht durch wenigstens einen anderen Zugriffspunkt, mit dem sich das Kommunikationsendgerät (13) verbinden kann, ausgelöst wird.

9. Verfahren nach Anspruch 8, **dadurch gekennzeichnet, dass** es einen Schritt des Hinzufügens des neuen Datenflusses zu einer Tabelle für die Steuerung des Flusses des ersten Netzes (10) und einen Schritt des Verifizierens durch die Schnittstellenvorrichtung (12) einer Möglichkeit, den Datenfluss zu dem zweiten Netz hinzuzufügen, umfasst, derart, dass dann, wenn sich diese Möglichkeit als richtig erweist, ein Schritt des Hinzufügens des neuen Datenflusses zu einer Tabelle für die Steuerung der Flüsse der Vorrichtung (12) ausgeführt wird.

10. Verfahren nach einem der Ansprüche 1 bis 7, **dadurch gekennzeichnet, dass** dann, wenn das erste Endgerät (13) in Übereinstimmung mit dem UMA-Standard ist, der Datenfluss ein Fluss des Typs Sprach-UMA ist.

11. System für die Kommunikation zwischen wenigstens einem ersten Kommunikationsendgerät (13), das zu einem ersten Kommunikationsnetz (10) gehört, und wenigstens einem zweiten Kommunikationsendgerät (14), das zu einem zweiten Kommunikationsnetz (11) gehört, wobei das erste Netz (10) und das zweite Netz (11) über eine Schnittstellenvorrichtung (12) miteinander verbunden sind, das Folgendes umfasst:

   - Mittel zum dynamischen Berechnen eines maximalen Durchsatzwertes eines Datenflusses, der zwischen dem ersten Endgerät (13) und dem zweiten Endgerät (14) transportiert werden kann, wobei die Berechnungsmittel wenigstens einen Durchsatzwert berücksichtigen, der in dem ersten Kommunikationsnetz (10) und in dem zweiten Kommunikationsnetz (11) beobachtet wird;
   - Mittel zum Verarbeiten einer Anforderung zum Zulassen eines neuen Datenflusses zwischen dem ersten Endgerät (13) und dem zweiten Endgerät (14), wobei die Verarbeitung durch die Schnittstellenvorrichtung (12) unter Berücksichtigung des durch die Berechnungsmittel erzeugten Ergebnisses ausgeführt wird; und
   - Mittel zum Umleiten ohne Unterbrechung des neuen Datenflusses zu einem Mobilkommunikationsnetz, falls wenigstens eines der Netze keine ausreichenden verfügbaren Betriebsmittel hat.

12. Kommunikationsnetz nach Anspruch 11, **dadurch gekennzeichnet, dass** das erste Kommunikationsendgerät (13) mit dem durch die UMA-Norm definierten Standard in Übereinstimmung ist.

13. Computerprogrammprodukt, das von einem Kommunikationsnetz fernladbar ist und/oder auf einem computerlesbaren Datenträger gespeichert ist und/oder durch einen Mikroprozessor ausführbar ist, **dadurch gekennzeichnet, dass** es Codebefehle für die Ausführung eines Kommunikationsverfahrens nach einem der Ansprüche 1 bis 10 enthält.

## Claims

1. Method of communication between at least one first communication terminal (13) belonging to a first communication network (10) and at least one second communication terminal (14) belonging to a second communication network (11), said first (10) and second (11) networks being linked together via an interface device (12), comprising:

   • a step of dynamic calculation of a value of maximum bitrate of data stream able to travel between the first and second terminals (13) (14), said calculation taking account of bitrates observed in the first (10) and second (11) networks;
• a step of processing a request for admission of a new data stream between said first and second terminals (13) (14), said processing being executed by said interface device (12) while taking account of the result produced in said calculation step; and
• a step of interruption-less routing of said new data stream to a mobile communication network, if at least one of said networks does not have sufficient resources available.

2. Method according to Claim 1, **characterized in that** said processing step is a step of dynamic analysis of at least one availability criterion associated respectively with each of said networks (10) and (11), such that:

• if each network (10) and (11) is available to receive said new data stream, a communication tunnel dimensioned as a function of the bitrate necessary for the support of said new data stream is reserved between said first (13) and said second (14) terminal, by way of said interface device.

3. Method according to Claim 2, **characterized in that** said step of reserving said communication tunnel comprises at least one prior step of dynamic calculation of a value of maximum bitrate of said new data stream, as a function of at least one parameter representative of a coding-decoding operation applied to said stream.

4. Method according to Claim 3, **characterized in that** said at least one prior step of dynamic calculation is dependent on at least one parameter representative of a type of coder-decoder implemented by said first terminal to process said stream.

5. Method according to one of Claims 3 and 4, **characterized in that** said at least one prior step of dynamic calculation is dependent on at least one parameter representative of a mode of operation of a coder-decoder implemented by said first terminal to process said stream.

6. Method according to either one of Claims 2 and 3, **characterized in that** said second communication network (11) being of the WAN type, comprising a virtual communication channel (17) a first end of which is linked to said interface device (12) and a second end of which is linked to a collection and routing equipment item (18), said dynamic analysis step is a step of verification by said interface device (12) of a possibility of adding said new data stream onto said virtual channel (17).

7. Method according to any one of Claims 2 to 6, **characterized in that** said first communication network (10) being of the wireless network type comprising a plurality of access points ($15_i$, i= 1..N), termed WLAN network, said dynamic analysis step is a step of verification by at least one access point ($15_i$, i= 1..N) of a possibility of adding said new data stream onto said first network (10) between said interface device (12) and said access point.

8. Method according to either one of Claims 6 and 7, **characterized in that** in the case of an outgoing call sent by said first communication terminal (13), said first terminal (13) addresses a solicitation message bearing a resources reservation request to said interface device (12) by way of an access point, such that if said resources reservation request cannot be satisfied for the sending of a data stream by said access point, a step of automatic sending of a resource solicitation message by at least one other access point to which said communication terminal (13) can connect is triggered.

9. Method according to Claim 8, **characterized in that** it comprises a step of adding said new data stream to a management table for the streams of said first network (10) and a step of verification by said interface device (12) of a possibility of adding said data stream onto said second network, such that if this possibility is substantiated, a step of adding said new data stream to a management table for the streams of said device (12) is executed.

10. Method according to any one of Claims 1 to 7, **characterized in that** said first terminal (13) being in compliance with the UMA norm, said data stream is a stream of the voice UMA type.

11. System for communication between at least one first communication terminal (13) belonging to a first communication network (10) and at least one second communication terminal (14) belonging to a second communication network (11), said first (10) and second (11) networks being linked together via an interface device (12) comprising:

• means of dynamic calculation of a value of maximum bitrate of data stream able to travel between said first terminal (13) and said second terminal (14), said calculation means taking account of at least one bitrate value observed in the first (10) and second (11) communication networks;
• means for processing a request for admission of a new data stream between said first and second terminals (13) (14), said processing being executed by said interface device (12) while taking account of the result produced by said calculation means; and
• means of interruption-less routing of the new data stream to a mobile communication network, if at least one of said networks does not have sufficient resources available.

12. Communication system according to Claim 11, **characterized in that** said first (13) communication terminal complies with the norm defined by the UMA standard.

13. Computer program product downloadable from a communication network and/or stored on an information medium readable by computer and/or executable by a microprocessor, **characterized in that** it comprises code instructions for the execution of a method of communication in accordance with any one of Claims 1 to 10.

Figure 1

Figure 2

Figure 3

**EP 2 132 909 B1**

## RÉFÉRENCES CITÉES DANS LA DESCRIPTION

**Documents brevets cités dans la description**

- WO 2006037361 A